# EUROPÄISCHE PATENTSCHRIFT

(11) **EP 0 863 322 B1**
(45) Veröffentlichungstag und Bekanntmachung des Hinweises auf die Patenterteilung: **05.11.2003**
(21) Anmeldenummer: 98101991.2
(22) Anmeldetag: 05.02.1998
(51) Int. Cl.: F16C 7/02

(54) **Verfahren zum Herstellen eines Pleuels**
Process for producing a connecting rod
Procédé de fabrication d'une bielle

(30) Priorität: 04.03.1997 DE 19708567; 23.07.1997 DE 19731625
(43) Veröffentlichungstag der Anmeldung: 09.09.1998
(73) Patentinhaber: Volkswagen Aktiengesellschaft, 38436 Wolfsburg (DE)
(72) Erfinder: Schlegel, Udo, 38159 Vechelde (DE); Vogelsang, Reinhard, 38226 Salzgitter (DE)

(56) Entgegenhaltungen:
- WO-A-94/20765
- WO-A-96/04485
- WO-A-97/16578
- DE-A- 4 303 592
- DE-C- 584 864
- GB-A- 1 083 003
- US-A- 5 080 056

## Beschreibung

Die Erfindung betrifft ein Verfahren zum Herstellen eines Pleuelauges.

Die heute zum Einsatz kommenden Pleuel, insbesondere für Brennkraftmaschinen, werden als sogenannte geschnittene Pleuel oder als Crackpleuel ausgeführt. Geschnitten oder gecrackt wird hierbei das große Pleuelauge, das die Kurbelwelle umgreift. Das kleine Pleuelauge braucht in der Regel nicht geöffnet zu werden, da es über einen geraden Bolzen mit dem Kolben verbunden wird.

Je nach Lagerbelastung, werden die Pleuelaugen mit unterschiedlichen Lagerschalen (Gleitlager) ausgestattet. Als Lagerschalen kommen insbesondere Stützschalenwerkstoffe zum Einsatz, die in der Regel aus Stahl C 10 nach DIN 17210 bzw. SAE 1010 gebildet sind. Die Lagerschalen können je nach Bauform und Verwendung kalt verfestigt sein. Auf diesen Stützschalenwerkstoff kann die eigentliche Gleitlagerlaufschicht, beispielsweise Weißmetall, Bleibronze, Leichtmetall, Spatterschichten o. ä., in Abhängigkeit der zu erwartenden Lagerbelastung aufgebracht werden. Die Ausführung der Lagerschalen kann als Dreistoff-, Zweistoff- oder Massivlagerschale oder anderes erfolgen. Damit die Lagerschalen nach der Montage einen einwandfreien Festsitz erreichen, werden die Lagerschalen mit einer Vorspannung montiert.

Die Lagerschalen stellen nicht nur einen materiellen Kostenfaktor dar, sie beinhalten auch einen Produktionsaufwand und stellen eine Fehlerquelle dar. So kann beispielsweise bei der Montage der Einsatz einer Lagerschale oder Lagerschalenhälfte vergessen werden, wodurch es zu erheblichen Motorschäden kommt.

Aus der DE 43 03 592 A ist ein Verfahren zum Herstellen eines Pleuels mit einem Pleuelauge bekannt, wobei eine Lagerschicht durch thermisches Spritzen eines Lagerwerkstoffes direkt auf das Pleuelauge aufgebracht wird, das Pleuelauge vor dem Aufbringen des Lagerwerkstoffes, insbesondere durch Brechen, geöffnet wird, die innere Oberfläche der Lagerschicht mit einer Anrisskerbe versehen wird und das Pleuelauge zur Bruchtrennung der Lagerschicht erneut geöffnet wird.

Aufgabe der vorliegenden Erfindung ist es, ein Verfahren zum Herstellen eines Pleuels anzugeben, mittels dem eine Lagerschicht mit hoher Beschichtungsqualität aufgebracht werden kann.

Diese Aufgabe wird gelöst mit den Maßnahmen des Anspruchs 1.

Die Unteransprüche zeigen bevorzugte Ausführungsformen.

Erfindungsgemäß wird in ein Pleuelauge, hierbei handelt es sich insbesondere um das große Pleuelauge, ggf. auch beide Pleuelaugen, nicht mehr eine Lagerschale eingesetzt, sondern die Lagerschicht wird direkt durch thermisches Spritzen auf dem Pleuelauge aufgebracht. Das Pleuelauge wird vor dem Aufbringen des Lagerwerkstoffes durch Aufschneiden geöffnet. Die Teile werden anschließend wieder zusammengesetzt. In das wieder zusammengesetzte Pleuelauge wird vor dem Beschichten mit dem Lagerwerkstoff eine Kerbe (an der Trennstelle) eingebracht. Anschließend wird das Pleuelauge zur Trennung der Lagerschicht aufgebrochen.

Als thermisches Spritzen kommt insbesondere Plasmaspritzen zum Einsatz. Die Pleuel sind insbesondere Teile einer Verbrennungskraftmaschine.

Bei dem Aufspritzen der Lagerschicht wird vorteilhaft ein Metall aufgespritzt, wobei bevorzugt Metallegierungen zum Einsatz kommen. Weiterhin kommt bevorzugt ein Gemisch verschiedener Metalle (insbesondere Metallegierungen) zum Einsatz. Ein solches Gemisch kann beispielsweise eine Mischung aus Aluminium und Zinn sein, wobei die Mischung besonders vorteilhaft durch Mischen der einzelnen Komponenten in Pulverform erhalten wird. Die Klassifikation des Metallpulvers ist u.a. von den einzelnen Spritzparametern abhängig und kann von dem Fachmann durch Versuchsreihen leicht ermittelt werden. Als Lagerwerkstoffe werden vorteilhaft eingesetzt Bronzen, insbesondere Aluminiumbronze (Aluminium/Zinn), aber auch Kupferbronze sowie auch Metall-Weichstoff-Schichten und/oder Metall-Festschmierstoff-Schichten. Als Weichstoff kommen beispielsweise weiche Metalle, wie Blei zum Einsatz, die in einem härteren Metall, wie beispielsweise legiertem Aluminium (Aluminium/Kupfer/Magnesium/Chrom) verteilt sind. Als Weichstoffe können aber auch andere Materialien, wie beispielsweise Fluorpolymere (z. B. Polytetrafluorethylen) eingesetzt werden. Als Festschmierstoff eignen sich beispielsweise Verbindungen wie Molybdändisulfid, Bornitrit oder Graphit.

Besonders vorteilhaft wird der Lagerwerkstoff mit Übermaß aufgespritzt, das anschließend mechanisch nachbearbeitet wird. Zum Nacharbeiten kommt beispielsweise ein Honen zum Einsatz, insbesondere ist hier Feinspindeln geeignet. Beim Honen werden bevorzugt 20 bis 300 µm und insbesondere 50 bis 200 µm des Lagerwerkstoffes abgetragen; beim Feinspindeln beträgt das Übermaß vorteilhaft 50 bis 1 000 µm und insbesondere 100 bis 500 µm.

Die fertige Lagerschicht (nach dem Abtragen des Übermaßes) beträgt vorzugsweise 150 bis 800 µm und insbesondere 200 bis 500 µm. Eine solche Schicht ist erheblich dünner als die üblichen Lagerschalen, deren Dicke im Bereich 2,5 mm liegt. Dies bedeutet, daß am Pleuel entweder mehr Material bestehen bleibt (höhere Belastung möglich), oder daß die Pleuel mit einem geringeren Gewicht hergestellt werden können.

Die Kerben werden besqnders vorteilhaft mittels eines Lasers eingebracht, wobei beispielsweise ein FK-Laser unter ca. 45° in das Pleuelauge eingefahren wird. Als Laserleistung kommen insbesondere 5 bis 10 kW zum Einsatz. Die Kerbe wird vorteilhaft in einer Breite von 0,3 bis 0,8 mm und in einer Tiefe von 0,2 bis 0,7 mm eingebracht. Die Bruchstelle sitzt üblicherweise in etwa mittig in dem Pleuelauge. Alternativ kann die Kerbe auch über ein Räumwerkzeug, beispielsweise durch Stoßen, eingebracht werden.

Das oben beschriebene Bearbeiten der Lagerschicht (Honen oder Spindeln) erfolgt besonders vorteilhaft erst nach dem Öffnen des Pleuelauges. Hierdurch wird ein eventuell beim Brechen der Lagerschicht entstehender Grat an der Bruchkante gleichzeitig mit der Entfernung des Übermaßes entfernt.

In das erfindungsgemäß hergestellte Pleuel kann auch ein Ölkanal in das Pleuelauge eingebracht werden. Dieser Ölkanal wird vorteilhaft erst nach dem Aufbringen der Lagerschicht und insbesondere nach deren Nachbearbeitung in das Pleuelauge gebohrt. Der Ölkanal kann hierbei auch durch die Pleuelstange hindurch zu dem gegenüberliegenden Pleuelauge gebohrt werden.

Erfindungsgemäß werden auch die Planflächen (große Seitenflächen) des Pleuels vorteilhaft erst nach dem Aufbringen der Lagerschicht nachgearbeitet. Die Nachbearbeitung erfolgt hier vorzugsweise durch Schleifen der Planflächen.

Bei dem erfindungsgemäßen Verfahren wird dem Beschichten vorteilhaft ein Arbeitsschritt vorgeschaltet, in dem das Pleuelauge aufgerauht wird. Besonders vorteilhaft erfolgt das Aufrauhen durch Sandstrahlen, es ist jedoch auch ein Strahlen mit einer unter hohem Druck stehenden Flüssigkeit möglich. Das Material des Auges, insbesondere ein C 70 Stahl, wird hierbei vorteilhaft auf eine Mittenrauhtiefe Rₐ von 4 bis 30 µm, insbesondere 8 bis 12 µm aufgerauht. Bei solchen Mittenrauhtiefen wird eine besonders gute Haftung des Lagerwerkstoffes auf dem Material des Pleuelauges erreicht.

Für eine besonders vorteilhafte Fertigung der Lagerschicht in dem Pleuelauge wird mindestens eine der Planflächen des Pleuelauges mit einer Schablone abgedeckt, die eine Öffnung im Bereich des Pleuelauges aufweist. Diese Öffnung soll in etwa gleich groß sein wie das Pleuelauge, so daß der Beschichtungsvorgang durch die Schablone zum einen nicht gestört wird und zum anderen eine Beschichtung der Planfläche im Bereich des Pleuelauges weitgehend vermieden wird. Wenn nur eine Planfläche mit der Schablone abgedeckt wird, dann liegt die andere Planfläche vorteilhaft auf einer Palette, die im Bereich des Pleuelauges ebenfalls eine Öffnung, wie die Schablone, aufweist.

Erfindungsgemäß werden die Pleuelaugen einzelner Pleuel vorteilhaft in einem Arbeitsgang beschichtet. Hierzu liegen mehrere Pleuel, vorteilhaft 2 bis 10 und insbesondere 4 bis 8 derart übereinander, daß die zu beschichtenden Pleuelaugen einen Zylinder bilden. Hierzu kann auf einer Spezialpalette eine die Pleuel zentrierende Halterung vorgesehen sein, in die die Pleuel eingelegt werden. Vorteilhaft werden die bei diesem Verfahren praktisch gleichzeitig beschichteten Pleuel als Gruppe beibehalten, um anschließend in einer Verbrennungskraftmaschine gemeinsam verbaut zu werden. Vorteilhaft werden alle (gleichartigen) Pleuel einer Verbrennungskraftmaschine durch Übereinanderlegen gemeinsam beschichtet. Wenn dies wegen der Anzahl der Zylinder (beispielsweise 12-Zylinder) konstruktiv nicht möglich ist, dann werden zumindest die Pleuel einer Zylinderreihe (6 beim V 12-Motor) übereinanderliegend beschichtet. Mit dieser Verfahrensweise wird erreicht, daß Pleuel gleicher Qualität in einer Verbrennungskraftmaschine verbaut werden.

Während des thermischen Spritzens wird besonders vorteilhaft ein Gasstrom durch das Pleuelauge hindurchgeführt, insbesondere wenn mehrere Pleuel übereinanderliegend beschichtet werden. Als Gasstrom eignet sich insbesondere Luft, die konditioniert und gereinigt wird. Insbesondere soll der Luftstrom praktisch frei von Fett und Feuchtigkeit sein und möglichst in einem vorgegebenen Temperaturbereich (um ca. 20°C) liegen. Der Luftstrom hat vorteilhaft eine Strömungsgeschwindigkeit (Luftsinkgeschwindigkeit) von 3 bis 15 m/s und insbesondere 5 bis 8 m/s. Mit dem Gasstrom wird ein beim Spritzen entstehender Overspray weggeblasen.

Das Spritzen des Lagerwerkstoffes erfolgt vorzugsweise mit einer rotierenden Spritzdüse, die insbesondere bereits oberhalb des Pleuelauges rotierend in das Pleuelauge (bzw. die Pleuelaugen) eingefahren wird. Mit einer solchen Spritzdüse wird eine besonders gleichmäßige Beschichtung im Pleuelauge erreicht. Die Spritzdüse wird bei dem erfindungsgemäßen Beschichten des Pleuelauges mit einem Vorschub von vorzugsweise 0,5 bis 20 mm/s, insbesondere 2 bis 8 mm/s in das Plasmaauge hinein und durch dieses hindurchgeführt.

Beim Spritzauftrag werden besonders bevorzugt mehrere Schichten des Lagerwerkstoffes auf dem Pleuelauge aufgetragen, wobei insbesondere 4 bis 30 Schichten in dem Pleuelauge gebildet werden. Die Schichten werden dabei vorteilhaft in unterschiedlichen Richtungen aufgetragen, was wiederum der Verbesserung der Schichtqualität dient. Dies wird beim Pleuelauge dadurch erreicht, daß die Spritzdüse das Pleuelauge während des Hineinfahrens und während des Hinausfahrens beschichtet, wobei eine rotierende Spritzdüse vorzugsweise ihre Rotationsrichtung beibehält.

Erfindungsgemäß werden die Pleuel in einer Serienfertigung mit dem Lagerwerkstoff beschichtet. Hierbei ist es vorteilhaft, wenn zumindest einzelne Pleuel der Serie vermessen werden. Vermessen wird hierbei insbesondere die Mittenrauhtiefe Rₐ und/oder der Lagerwerkstoff selbst (z. B. die Gleichmäßigkeit der Verteilung des Lagerwerkstoffes beim Einsatz eines Gemisches). Besonders bevorzugt erfolgt das Vermessen der Pleuel zerstörungsfrei.

Die Erfindung wird im folgenden anhand von Zeichnungen und Ausführungsbeispielen näher beschrieben.

Es zeigen:
- Figur 1: ein Pleuel in Frontansicht;
- Figur 2: das Pleuel in Seitenansicht; und
- Figur 3: einen Schichtaufbau in dem großen Pleuelauge.

### Fertigungsablauf Crackpleuel

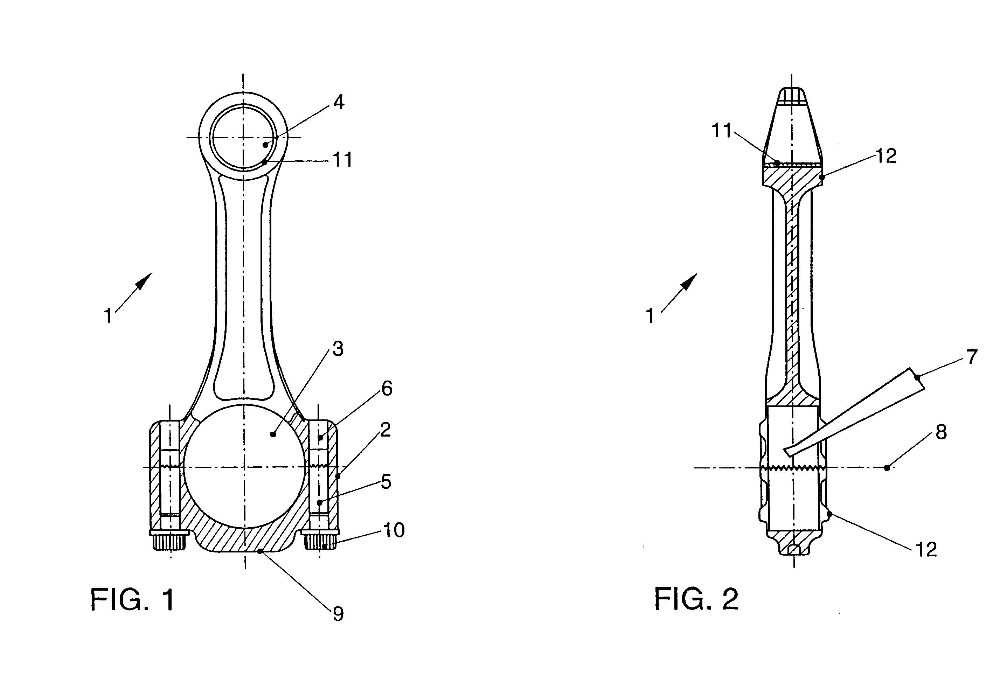

Übliche Pleuel 1 (Fig. 1 und 2), wie sie beispielsweise bisher mit Lagerschalen versehen wurden, z. B. aus C 70 Stahl, werden auf eine Fertigungsstraße gelegt. Hieran schließt sich das Vorschleifen der Seitenflächen 2 an. Anschließend werden das große und das kleine Pleuelauge 3,4 vorbearbeitet, d. h. auf Maß gebracht. Außerdem erfolgt die Schraublochbearbeitung für den Pleueldeckel 9 in den Seitenflächen 2, d. h. es werden Bohrungen 5 und Gewinde 6 eingebracht.

Zur Vorbereitung des Crackens wird in das große Pleuelauge 3 ein FK-Laser 7 unter einem Winkel von 45° eingefahren. Mittels des Lasers 7 wird beidseitig und mittig in das große Pleuelauge 3 je eine Kerbe 8 in einer Breite von ca. 0,5 mm und einer Tiefe von ca. 0,3 bis 0,5 mm eingebrannt. Alternativ kann die Kerbe auch über ein Räumwerkzeug eingebracht werden.

Nachdem die Kerben 8 eingebracht wurden, wird das große Pleuelauge 3, wie weiter unten beschrieben, plasmabeschichtet. Nach dem Auftrag der Plasmaschicht wird das große Pleuelauge 3 zusammen mit der Plasmaschicht über eine Brechvorrichtung mit einer Brechkraft von ca. 100 kN gecrackt. Die Bruchstelle wird gereinigt (mit Druckluft abgeblasen) und der abgebrochene Pleuellagerdeckel 9 mit Schrauben 10 mit dem vorgesehenen Drehmoment montiert. Auch das kleine Pleuelauge wird durch Einpressen einer Buchse 11 montiert. Danach werden die Planflächen 12 fertiggeschliffen.

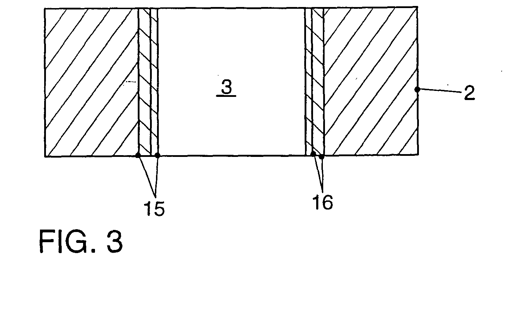

Das große Pleuelauge 3 und ggf. auch das kleine Pleuelauge 4 werden nun auf Maß 16 (Fig. 3) gebracht. Dies geschieht durch Feinbohren bzw. Feinspindeln. Anschließend wird das Pleuel einer kompletten Reinigung unterzogen, vermessen und klassiert.

### Fertigungsablauf geschnittenes Pleuel

Der erfindungsgemäße Fertigungsablauf für ein geschnittenes Pleuel ist im wesentlichen mit dem oben beschriebenen Ablauf gleich, es wird jedoch das Pleuelauge bereits nach dem Räumen der Seitenflächen, der Kopfflächen und Schraubenauflagen durch Aufschneiden getrennt. Nach dem Aufschneiden werden die Trennflächen auf der Pleuelstange und dem Pleueldeckel einzeln geräumt. Hieran schließt sich ein Waschschritt an, nach dem das kleine Pleuelauge vor- und fertigbearbeitet wird. Nun werden die Deckelschrauben durch Einbringen von Bohrungen und Gewinden in die Seitenflächen eingebracht. Die Trennflächen an Pleuelstange und Pleueldeckel werden fertiggeschliffen, nochmal gewaschen und der Pleueldeckel auf die Pleuelstange montiert. Die Schnittfläche wird wieder mit einem FK-Laser gekerbt und anschließend wird das große Pleuelauge mit der Lagerschicht versehen, die anschließend wieder gebrochen wird.

Einzelne Fertigungsschritte, wie beispielsweise das Einpressen der Lagerschale 11 in das kleine Pleuelauge 4 können an unterschiedlichen Stellen des Gesamtablaufs erfolgen, beispielsweise auch bereits vor der Plasmabeschichtung.

### Fertigungsablauf Plasmabeschichtung des großen Pleuelauges

Für die Plasmabeschichtung werden die Pleuel gewaschen und das große Pleuelauge mit Heißdampf entfettet, danach praktisch Restfeuchte frei getrocknet. Die so vorbehandelten Pleuel werden zu 4 bis 8 Stück übereinander gestapelt, so daß die großen Pleuelaugen konzentrisch auf einer entsprechenden Öffnung einer Spezialpalette liegen. Die Pleuel werden dabei vorteilhaft über das vorbearbeitete kleine Pleuelauge und die Pleuelstange bzw. Seitenflächen ausgerichtet und fixiert. Die beladenen Paletten gelangen über eine Bereitstellzone in eine Sandstrahleinheit, in der das große Pleuelauge durch Sandstrahlen auf eine Mittenrauhtiefe Rₐ von ca. 8 bis 12 µm gebracht wird. Anschließend werden die Pleuel in eine Reinigungsstation gefahren und die gestrahlte Oberfläche mit Druckluft ab- bzw. ausgeblasen. Die vorbehandelten Pleuel fahren schließlich in die Plasmastation, in der das große Pleuelauge mit einem rotierenden Plasmabrenner in einer Schichtdicke 15 von ca. 0,5 mm mit einer Aluminiumbronze beschichtet wird (Fig. 3). Die beschichteten Pleuel kommen danach in eine Kühlzone, von der die abgekühlten Pleuel von der Spezialpalette entnommen und der oben beschriebenen Weiterbearbeitung zugeführt werden.

Die erfindungsgemäß hergestellten Pleuel haben den Vorteil, daß sie im großen Pleuelauge keine Lagerschale enthalten, somit entfällt auch die Lagerschalenmontage selbst sowie das Einbringen von Haltenuten bzw. das Entgraten der Lagerschalen. Hierdurch wird das Aufbringen der Plasmaschicht kostenmäßig wettbewerbsfähig. Außerdem ist bei den plasmabeschichteten Pleueln die Montagesicherheit erhöht, da keine Lagerschalen bei der Montage ausgelassen werden können.

Die erfindungsgemäßen Pleuel haben am großen Pleuelauge eine größere Stegbreite im Bereich der Lagerdeckelbefestigung, da die Plasmaschicht nach der Nachbearbeitung nur ca. 0,3 mm dick ist, eine Lagerschale jedoch 2,5 mm aufträgt. Hierdurch ist eine höhere Pleuelbelastung für höherbelastete Motoren und/oder eine Gewichtsersparnis möglich. Außerdem entfällt der Spalt zwischen zwei Lagerschalenhälften, an dem bei einer höheren Belastung der Ölfilm abzureißen beginnt. Die erfindungsgemäß hergestellten Pleuel haben somit bessere Schmiereigenschaften.

## Patentansprüche

1. Verfahren zum Herstellen eines Pleuels mit einem Pleuelauge, in dem eine Lagerschicht angeordnet ist, wobei die Lagerschicht durch thermisches Spritzen eines Lagerwerkstoffes direkt auf das Pleuelauge aufgebracht wird, das Pleuelauge vor dem Aufbringen des Lagerwerkstoffes durch Aufschneiden geöffnet wird, das geöffnete Pleuelauge zusammengesetzt wird, das zusammengesetzte Pleuelauge im Bereich der Trennfuge gekerbt wird, danach auf das Pleuelauge der Lagerwerkstoff aufgebracht wird und anschließend das Pleuelauge durch Brechen erneut geöffnet wird.

2. Verfahren nach Anspruch 1, **dadurch gekennzeichnet, daß** der Lagerwerkstoff mittels Plasmaspritzen aufgebracht wird.

3. Verfahren nach Anspruch 1 oder 2, **dadurch gekennzeichnet, daß** als Lagerwerkstoff ein Metall, insbesondere eine Metallegierung und insbesondere ein Gemisch verschiedener Metalle aufgebracht wird.

4. Verfahren nach Anspruch 3, **dadurch gekennzeichnet, daß** als Lagerwerkstoff eine Bronze, insbesondere eine Aluminimumbronze, aufgebracht wird.

5. Verfahren nach Anspruch 3 oder 4, **dadurch gekennzeichnet, daß** als Lagerwerkstoff eine Metall-Weichstoff- und/oder Metall-Festschmierstoff-Schicht aufgebracht wird.

6. Verfahren nach einem der vorhergehenden Ansprüche, **dadurch gekennzeichnet, daß** der aufgebrachte Lagerwerkstoff mechanisch nachbearbeitet wird, insbesondere spannabhebend.

7. Verfahren nach Anspruch 6, **dadurch gekennzeichnet, daß** der aufgebrachte Lagerwerkstoff gehont oder feingespindelt wird.

8. Verfahren nach Anspruch 7, **dadurch gekennzeichnet, daß** beim Honen 20 bis 300 µm, insbesondere 50 bis 200 µm des aufgebrachten Lagerwerkstoffes abgetragen werden.

9. Verfahren nach Anspruch 7, **dadurch gekennzeichnet, daß** beim Feinspindeln 50 bis 1 000 µm, insbesondere 100 bis 500 µm abgetragen werden.

10. Verfahren nach einem der vorhergehenden Ansprüche, **dadurch gekennzeichnet, daß** der Lagerwerkstoff in einer Dicke, ggf. nach einer Nachbearbeitung, von 150 bis 800 µm, insbesondere 200 bis 500 µm hergestellt wird.

11. Verfahren nach einem der vorhergehenden Ansprüche, **dadurch gekennzeichnet, daß** nach dem Aufbringen des Lagerwerkstoffes ein Ölkanal in das Pleuelauge gebohrt wird.

12. Verfahren nach einem der vorhergehenden Ansprüche, **dadurch gekennzeichnet, daß** nach dem Aufbringen des Lagerwerkstoffes die Planflächen des Pleuels nachbearbeitet, insbesondere geschliffen werden.

13. Verfahren nach einem der vorhergehenden Ansprüche, **dadurch gekennzeichnet, daß** vor dem Aufbringen des Lagerwerkstoffes das Pleuelauge aufgerauht wird, insbesondere durch Sandstrahlen.

14. Verfahren nach Anspruch 13, **dadurch gekennzeichnet, daß** das Pleuelauge auf eine Mittenrauhtiefe Rₐ von 4 bis 30 µm, insbesondere 8 bis 12 µm aufgerauht wird.

15. Verfahren nach einem der vorhergehenden Ansprüche, **dadurch gekennzeichnet, daß** das mit dem Lagerwerkstoff zu beschichtende Pleuelauge und/oder das mit dem Lagerwerkstoff beschichtete Pleuelauge zumindest von einzelnen Pleueln einer Serie zerstörungsfrei vermessen wird.

16. Verfahren nach einem der vorhergehenden Ansprüche, **dadurch gekennzeichnet, daß** der Lagerwerkstoff mittels einer rotierenden Spritzdüse bzw. mittels eines rotierenden Ablenkteils für den Lagerwerkstoffstrahl aufgebracht wird.

17. Verfahren nach einem der vorhergehenden Ansprüche, **dadurch gekennzeichnet, daß** der Lagerwerkstoff in Pulverform aufgespritzt wird.

18. Verfahren nach einem der vorhergehenden Ansprüche, **dadurch gekennzeichnet, daß** während des thermischen Spritzens ein Gasstrom, insbesondere Luftstrom, mit einer Strömungsgeschwindigkeit von 3 bis 15 m/s, insbesondere 5 bis 10 m/s, durch das Pleuelauge geführt wird.

19. Verfahren nach einem der vorhergehenden Ansprüche, **dadurch gekennzeichnet, daß** das thermische Spritzen mit einem Vorschub von 0,5 bis 20 mm/s, insbesondere 2 bis 8 mm/s, durch das Pleuelauge durchgeführt wird.

## Claims

1. Method of producing a connecting rod with a connecting-rod eye in which a bearing layer is arranged, in which the bearing layer is applied directly to the connecting-rod eye by thermal spraying of a bearing material the connecting-rod eye is opened by being cut open before the bearing material is applied, the opened connecting-rod eye is fitted together, the fitted-together connecting-rod eye is notched in the region of the separation line, then the bearing material is applied to the connecting-rod eye and the connecting-rod eye is subsequently opened by breaking.

2. Method according to Claim 1, **characterized in that** the bearing material is applied by means of plasma spraying.

3. Method according to either of Claims 1 or 2, **characterized in that** a metal, in particular a metal alloy, and in particular a mixture of different metals, is applied as bearing material.

4. Method according to Claim 3, **characterized in that** a bronze, in particular an aluminium bronze, is applied as bearing material.

5. Method according to either of Claims 3 or 4, **characterized in that** a metal/soft material layer and/or a metal/solid lubricant layer is applied as bearing material.

6. Method according to one of the preceding claims, **characterized in that** the bearing material applied is mechanically reworked, in particular by metal-cutting.

7. Method according to Claim 6, **characterized in that** the bearing material applied is honed or finely spindled.

8. Method according to Claim 7, **characterized in that** 20 to 300 µm, in particular 50 to 200 µm, of the bearing material applied are removed during honing.

9. Method according to Claim 7, **characterized in that** 50 to 1000 µm, in particular 100 to 500 µm, are removed during fine spindling.

10. Method according to one of the preceding claims, **characterized in that** the bearing material is produced to a thickness, if appropriate after reworking, of 150 to 800 µm, in particular 200 to 500 µm.

11. Method according to one of the preceding claims, **characterized in that** an oil duct is bored into the connecting-rod eye after the bearing material has been applied.

12. Method according to one of the preceding claims, **characterized in that** the flat surfaces of the connecting rod are reworked, in particular ground, after the bearing material has been applied.

13. Method according to one of the preceding claims, **characterized in that** the connecting-rod eye is roughened, in particular by sandblasting, before the bearing material is applied.

14. Method according to Claim 13, **characterized in that** the connecting-rod eye is roughened to an average peak-to-valley height Rₐ of 4 to 30 µm, in particular 8 to 12 µm.

15. Method according to one of the preceding claims, **characterized in that** the connecting-rod eye to be coated with the bearing material and/or the connecting-rod eye which has been coated with the bearing material at least of some individual connecting rods from a series is measured in a nondestructive manner.

16. Method according to one of the preceding claims, **characterized in that** the bearing material is applied by means of a rotating spray diffuser or by means of a rotating deflection part for the bearing-material jet.

17. Method according to one of the preceding claims, **characterized in that** the bearing material is sprayed on in powder form.

18. Method according to one of the preceding claims, **characterized in that**, during the thermal spraying, a gas stream, in particular an air stream, is passed through the connecting-rod eye at a flow velocity of 3 to 15 m/s, in particular 5 to 10 m/s.

19. Method according to one of the preceding claims, **characterized in that** the thermal spraying is carried out through the connecting-rod eye with an advancing rate of 0.5 to 20 mm/s, in particular 2 to 8 mm/s.

## Revendications

1. Procédé de fabrication d'une bielle avec un oeil de pied de bielle, dans lequel est disposée une couche de support, la couche de support étant appliquée par injection thermique d'un matériau de support directement sur l'oeil de pied de bielle, l'oeil de pied de bielle étant ouvert par découpage avant l'application du matériau de support, l'oeil de pied de bielle ouvert étant assemblé, l'oeil de pied de bielle assemblé entant entaillé dans la région de la ligne de joint, après quoi le matériau de support étant appliqué sur l'oeil de pied de bielle, et ensuite l'oeil de pied de bielle étant à nouveau ouvert par fracture.

2. Procédé selon la revendication 1, **caractérisé en ce que** le matériau de support est appliqué au moyen d'une pulvérisation à plasma.

3. Procédé selon la revendication 1 ou 2, **caractérisé en ce que** l'on applique en tant que matériau de support un métal, en particulier un alliage métallique et en particulier un mélange de différents métaux.

4. Procédé selon la revendication 3, **caractérisé en ce que** l'on applique en tant que matériau de support un bronze, en particulier un bronze d'aluminium.

5. Procédé selon la revendication 3 ou 4, **caractérisé en ce que** l'on applique en tant que matériau de support une couche de matériau tendre métallique et/ou une couche de lubrifiant solide métallique.

6. Procédé selon l'une quelconque des revendications précédentes, **caractérisé en ce que** le matériau de support appliqué est post-usiné, en particulier par enlèvement de copeaux.

7. Procédé selon la revendication 6, **caractérisé en ce que** le matériau de support appliqué est rodé, ou usiné finement à la broche.

8. Procédé selon la revendication 7, **caractérisé en ce que** dans le cas du rodage, 20 à 300 µm, en particulier 50 à 200 µm du matériau de support appliqué sont enlevés.

9. Procédé selon la revendication 7, **caractérisé en ce que** lors de l'usinage fin à la broche, 50 à 1000 µm, en particulier 100 à 500 µm sont enlevés.

10. Procédé selon l'une quelconque des revendications précédentes, **caractérisé en ce que** le matériau de support est fabriqué avec une épaisseur, éventuellement après un post-usinage, de 150 à 800 µm, en particulier de 200 à 500 µm.

11. Procédé selon l'une quelconque des revendications précédentes, **caractérisé en ce qu'**après l'application du matériau de support, un canal d'huile est percé dans l'oeil de pied de bielle.

12. Procédé selon l'une quelconque des revendications précédentes, **caractérisé en ce qu'**après l'application du matériau de support, les faces planes de la bielle sont post-usinées, en particulier par meulage.

13. Procédé selon l'une quelconque des revendications précédentes, **caractérisé en ce qu'**avant l'application du matériau de support, l'oeil de pied de bielle est rendu rugueux, en particulier par sablage.

14. Procédé selon la revendication 13, **caractérisé en ce que** l'oeil de pied de bielle est rendu rugueux avec une profondeur de rugosité moyenne Rₐ de 4 à 30 µm, en particulier de 8 à 12 µm.

15. Procédé selon l'une quelconque des revendications précédentes, **caractérisé en ce que** l'oeil de pied de bielle devant être revêtu du matériau de support et/ou l'oeil de pied de bielle revêtu du matériau de support d'au moins des bielles individuelles d'une série est mesuré sans destruction.

16. Procédé selon l'une quelconque des revendications précédentes, **caractérisé en ce que** le matériau de support est appliqué au moyen d'une buse d'injection rotative ou au moyen d'une partie déflectrice rotative pour le jet de matériau de support.

17. Procédé selon l'une quelconque des revendications précédentes, **caractérisé en ce que** le matériau de support est pulvérisé sous forme pulvérulente.

18. Procédé selon l'une quelconque des revendications précédentes, **caractérisé en ce que** l'injection thermique d'un courant gazeux, en particulier d'un courant d'air, avec une vitesse d'écoulement de 3 à 15 m/s, en particulier de 5 à 10 m/s, est guidée à travers l'oeil de pied de bielle.

19. Procédé selon l'une quelconque des revendications précédentes, **caractérisé en ce que** l'injection thermique est réalisée avec une avance de 0,5 à 20 mm/s, en particulier de 2 à 8 mm/s, à travers l'oeil de pied de bielle.
